Europäisches Patentamt

European Patent Office

Office européen des brevets

(11) Publication number: **0 574 009 A2**

# EUROPEAN PATENT APPLICATION

(21) Application number: 93109393.4

(22) Date of filing: **11.06.93**

(51) Int. Cl.5: **G01S 5/14**

(30) Priority: **12.06.92 JP 40385/92 U**
**03.12.92 JP 83489/92 U**

(43) Date of publication of application:
**15.12.93 Bulletin 93/50**

(84) Designated Contracting States:
**DE FR GB**

(71) Applicant: **TOKYO COSMOS CO., LTD.**
**1387, Tobukicho**
**Hachioji-shi, Tokyo(JP)**
Applicant: **Miwa, Hirohide**
**7-10 Miyazaki 6-chome**
**Miyamae-Ku Kawasaki-Shi**
**Kanagawan-Ken(JP)**

(72) Inventor: **Miwa, Hirohide**
**6-7-10, Miyazaki**
**Miyamae-ku, Kanagawa(JP)**

(74) Representative: **Hoffmann, Eckart**
**Patentanwalt Blumbach & Partner**
**Bahnhofstrasse 103**
**D-82166 Gräfelfing (DE)**

(54) **DGPS positioning method, DGPS reference station and DGPS positioning apparatus for moving object.**

(57) In a differential GPS reference station (11) the accurate position of which is preknown, the position or pseudo range of the reference station is measured by a GPS stand-alone positioning unit on the basis of signals received from GPS satellites $13_1$ through $13_4$ and an error between the measured position or pseudo range of the reference station and its actual position or pseudo range is computed by a computer (14). A correction value for the error and the PRN number of each used satellite are broadcast, as reference station information, from RDS broadcasting equipment (12) while being multiplexed in an FM broadcast as an RDS signal. In a car (21), a car radio (22) receives the FM broadcast and extracts therefrom the reference station information and provides it to a computing part (23C). A GPS stand-alone positioning unit (23G) receives the signal from the GPS satellites of the same PRN number and performs GPS positioning, and the computing part (23C) corrects the measured value with the above-mentioned error and, if necessary, provides the corrected value to a navigation system (24).

FIG. 1

## BACKGROUND OF THE INVENTION

The present invention relates to a differential GPS (DGPS) positioning method and a DGPS reference station and a DGPS positioning apparatus for moving objects which are used for positioning vehicles (such as cars, motorcycles, personels, etc.), or ships during their arrival in port or departure therefrom, with a relatively high degree of accuracy (within 10 m).

According to the Global Positioning System of the U.S. Armed Forces, 24 satellites (three of which are spare) are put into six orbits around the earth, four for each orbit, pieces of data to be transmitted from each satellite, such as orbit data (50 bps) and ionosphere correction data (50 bps), are spectrum-spread through multiplication by a pseudo random (PRN) code (in the case of the P code, 10.23 Mbps in bit rate and 1 Week in code length; in the case of the C/A code, 1.023 Mbps in bit rate and 1 ms in code length), carriers are subjected to PSK modulation by the spectrum-spread signal and then the pieces of data are transmitted to the earth at 1,575.42 MHz and 1,227.6 MHz in the case of the P code and at 1,575.42 MHz in the case of the C/A code.

When receiving the signal from an i-th satellite on the earth, the distance CTi between the i-th satellite and the place of receiving on the earth can be obtained from the time difference between the transmitted PRN code and the received PRN code and the velocity of propagation C of the electric wave. In practice, since an error $\Delta Tm$ of a timepiece in the receiver is present, the distance CTi will hereinafter be referred to as a pseudo range Ri. The following equation can be obtained from the position (Xi, Yi, Zi) of the satellite at the time of transmitting the PRN code and the position (Xm, Ym, Zm) of the code receiving point on the earth.

$$\{(Xi - Xm)^2 + (Yi - Ym)^2 + (Zi - Zm)^2\}^{1/2} = C(Ti - \Delta Tm) \quad (1)$$

The position of the satellite at the time of transmitting the code, (Xi, Yi, Zi), can be computed using the orbit data received from the satellite. In Eq. (1), Xm, Ym, Zm and $\Delta Tm$ are unknowns. Hence, by obtaining four equations similar to the above through observation of four satellites, the position of the code receiving point, (Xm, Ym, Zm), and the error $\Delta Tm$ could be obtained. On the sea or in a plain the term Z is preknown and, therefore, two-dimensional positioning (Xm, Ym) could be achieved by observing three satellites. Such a positioning method is called a stand-alone positioning method. The transmission of the ID number or PRN code number of each satellite used from a reference station is needed to identify the satellites to be used and to prevent the use of wrong satellites in the case where a moving object uses four (or three) satellites to perform three- (or two-)dimensional positioning when more than four (or three) satellites are available.

It is said that positioning accuracy is around 16 m in the case of using the P code as the PRN code, but the P code is used for military purposes and is not open to public use. The C/A code can be utilized with no restrictions but the use of this code induces a positioning error of about 100 m. It is said that such a large positioning error is caused by the inclusion of intentional errors in the orbit data or the like, as well as the facts that since only one carrier is used, a propagation delay by the ionosphere cannot be corrected and that the bit rate of the PRN code is so low that time resolution is poor.

GPS positioning units for moving objects, now placed on the market, are mostly of the stand-alone positioning system. Hence, an automobile navigation system utilizing only the GPS techniques has a defect that the position of the car may sometimes be displayed on a nearby road or its vicinity on the map, for instance. To avoid this, the navigation system is used in combination with a direction sensor, a speed sensor, a travel distance sensor and so forth, and hence is complex and expensive. Furthermore, the reliability of the system is low.

There is another system of high accuracy (on the order of centimeters) which utilizes the phase of a carrier, but this system is not suitable for positioning of moving objects because it requires an expensive receiver and consumes much time for measurement.

One possible method that has been proposed for less time-consuming, easier and more accurate positioning is a method which performs positioning both at a reference point of a preknown position and a mobile point and measures their difference (the position vector from the reference point to the mobile point). This method cancels an error of the propagation time in the ionosphere, an error in orbit data, etc., and hence provides an accuracy of several meters. This system is mathematically equivalent to a system wherein an error of the GPS measured value at the reference point, whose actual position is preknown, or its correction value (a polarity-inverted version of the error; the error may sometimes be referred to as a correction value in the following description) is indicated to the mobile point and the GPS measured value at the mobile point is corrected by the error information. This system is called a Differential GPS and in Japan it is sometimes referred to as a translocation system. This method is said to be usable in the case where the distance between the reference station and the mobile point is within hundreds of kilometers.

In this instance, the reference station needs to transmit to the moving object, by radio, reference station information such as the ID numbers (or the PRN code numbers) of the three or four satellites being used and errors ΔX, ΔY, ΔZ between the measured position of measurement and the actual position or an error ΔRi of the pseudo range Ri for each i. This error transmission constitutes an obstacle to broadening of the application of the differential GPS method.

However, a company R transmits such reference station information only to subscribers through use of an INMARSAT communication satellite. In Japan a company S acts for the company R and has a reference station at Sapporo, essentially covering Japan and the sea off Japan. This system is said to be usable even if the distance between the reference station and the moving object is in excess of 1500 km. The positioning accuracy is within 3 to 5 m and data is transmitted every three seconds. While this system is intended for use primarily in positioning ships (including positioning when they enter and leave ports), its positioning accuracy is sufficiently high for land mobile navigation use as well.

The system of the company R has a sufficiently high accuracy for the land mobile navigation but presents a problem as the cost of use is so high that the system cannot be used for automobiles, motorcycles and so forth. According to materials made public so far, every subscriber needs to pay 100,000 to 150,000 yen per day as the rental fee for equipment. The reason for such a heavy cost is not clear but it is attributable to the communication system that utilizes the INMARSAT communication satellite, because charges for the use of transmitting equipment, receiving equipment and the satellite usage are probably very heavy. The cost of the GPS stand-alone positioning unit is only 100,000 yen or so.

## SUMMARY OF THE INVENTION

A first object of the present invention is to provide a low-cost differential GPS positioning method which permits highly accurate positioning.

A second object of the present invention is to provide a differential GPS reference station which can be used at low cost with automobiles, motorcycles, personels and even boats that sail on the sea near the shore.

A third object of the present invention is to provide a low-cost differential GPS positioning apparatus for moving objects which can be used with automobiles, motorcycles, personels and even boats which sail on the sea near the shore.

A fourth object of the present invention is to provide a low-cost radio receiver for the differential GPS positioning apparatus which can be used with automobiles, motorcycles, personels and even boats which sail on the sea near the shore.

A fifth object of the present invention is to provide a low-cost navigation apparatus equipped with the differential GPS positioning apparatus for moving objects which can be used with automobiles, motorcycles, personels and even boats which sail on the sea near the shore.

According to a first aspect of the present invention, a differential GPS reference station, whose actual position is preknown, generates, for at least one set of satellites, reference station positioning information which includes measured position information corresponding to the position of the reference station defined by orbit data from a plurality of satellites selected by the GPS stand-alone positioning unit and actual position information of the reference station. This reference station positioning information is combined with utilized satellite information indicating the ID numbers or their PRN code numbers of the satellites, and the combined information is broadcast as reference station information after being multiplexed with the existing public radio broadcasting. A moving object receives the broadcast, separates the utilized satellite information and the reference station positioning information from the reference station information, then computes position information corresponding to the position of the moving object on the basis of orbit data received by a GPS stand-alone positioning unit with the satellites in accordance with the utilized satellite information and computes a corrected position of the moving object through utilization of the above-said moving object position information and the reference station positioning information contained in the reference station information.

For example, the reference station measures its position on the basis of orbit data received by the GPS stand-alone positioning unit from the respective satellites and broadcasts the difference between the measured position and the actual position, as the above-mentioned reference station positioning information. On the other hand, the moving object measures its position by its own GPS stand-alone positioning unit and adds its measured position with the above-noted difference separated from the reference station positioning information obtained by receiving the radio broadcasting, thereby obtaining a corrected position of the moving object.

It is also possible to employ a method wherein the differential GPS reference station measures its position through use of a set of satellites and broadcasts its measured and actual positions as the above-noted reference station positioning information, whereas the moving object measures its position through use of the same satellite set, obtains the difference (or relative position or position vector) between the measured position of the moving object and the measured position of the reference station and then adds the relative position to the actual position of the reference station to obtain the corrected position of the moving object.

Alternatively, it is possible to employ a method wherein the difference between a pseudo range measured by the differential GPS reference station and a range computed from orbit data of each satellite and the actual position of the reference station, that is, an error of the pseudo range, or its correction value is broadcast for each satellite, as the above-said reference station positioning information, from the reference station together with the reference station information, and in moving object the pseudo range between it and each of the same satellites as those used by the reference station for measuring the respective pseudo ranges is measured, the measured pseudo ranges are corrected using the errors or correction values received from the broadcasting and the thus corrected pseudo ranges are used to obtain the position of the moving object.

Also it is possible to employ a method wherein information indicating the actual position of the reference station and the pseudo range between it and each of the satellites, measured by the reference station, are broadcast, as the reference station positioning information, while being included in the reference station information and, in the moving object its position is determined as follows: First, the position vector from the reference station to the moving object is computed on the basis of the pseudo ranges obtained by receiving the broadcasting and the pseudo ranges measured by the GPS stand-alone positioning unit of the moving object. That is, the measured position of the differential GPS reference station is obtained from the pseudo ranges obtained by receiving the broadcasting, the position of the moving object is obtained from the pseudo ranges between it and the respective satellites, measured by the moving object, and the difference between the both positions (the relative position or position vector) is obtained. Then the position of the moving object can be determined by adding the relative position to the actual position of the reference station obtained from the broadcast or the broadcast ID code of the reference station with reference to a table listing ID codes versus actual positions of reference stations.

In the case of broadcasting pseudo range data or its error (correction value) data as the reference station positioning information, the reference station needs only to broadcast data for each available satellite and thus there is no need of determine a combination (set) of satellites as in the case of broadcasting the position error (correction values). When receiving such pseudo range data or error data on the respective satellites, the moving object is allowed to selectively use the data on the satellites available to the moving object without caring the combination.

According to a second aspect of the present invention, a differential GPS reference station whose actual position is preknown is provided with: positioning means which receives data from at least a set of selected satellites and performs GPS stand-alone positioning; means which generates reference station positioning information representing the relationship between the measured position and the actual position of the reference station and outputs the reference station positioning information, as reference station information, together with utilized satellite information representing chosen satellites; and means which broadcasts the reference station information while multiplexing it with the existing public radio broadcasting, without using such a specific means as the INMARSAT communication satellite.

According to a third aspect of the present invention, a differential GPS positioning apparatus for a moving object is provided with: positioning means which is carried on the moving object or made portable and performs GPS stand-alone positioning; and reference station information extracting means which receives public radio broadcasting from a differential GPS reference station and extracts reference station information multiplexed with the public radio broadcasting; and combining means which combines the extracted reference station information with data obtained with the positioning means to perform corrective positioning of the moving object.

As public broadcasting networks, there exist TV broadcasting, radio broadcasting, satellite broadcasting, weather broadcasting, disaster prevention broadcasting, and their profits and losses are already substantially balanced; thus, a large investment would not be needed to multiplex the reference station information with them and the information could be presented to many and unspecified moving objects with almost free charge. The reference station information could easily be put on air through an RDS system of FM radio broadcasting which has already been put into operation in Europe and will be put into operation in Japan and some other countries.

The radio receiver for the differential GPS positioning apparatus according to the present invention receives the broadcast wave multiplexed with the reference station information of the differential GPS reference station, extracts the reference information and supplies it to an external output terminal. When the received wave becomes weak, the radio receiver is automatically tuned by automatic tune switching means to a channel of a normal field intensity.

The radio receiver for the differential GPS positioning apparatus according to the present invention receives the broadcast wave multiplexed with the reference station information of the differential reference station, extracts the reference station information by extracting means and outputs it in a visible or audible form. When the received wave becomes weak, the radio receiver is automatically tuned by automatic tune switching means to a channel of a normal field intensity.

The portable GPS stand-alone positioning unit for a moving object according to the present invention is commercially available for 100,000 to 200,000 yen. Considering the kind of the public broadcasting network, it is preferable that the receiver for use with the GPS stand-alone positioning unit for moving object be operable with a small and non-directional antenna. A radio receiver satisfies this requirement. No special facility is needed when multiplexing the reference station information with FM broadcasting through use of the RDS. Even if RDS transmitting equipment should newly be set up, an investment of 2,000,000 to 3,000,000 yen per station would be sufficient. The differential GPS reference station and a broadcasting station could be built in the same site. On the other hand, the RDS receiver is already on the market and an additional cost of a device for extracting, as digital data, the reference station information from the FM broadcasting and outputting it is about 10,000 yen. The correction of data of the GPS stand-alone positioning unit through use of the broadcast data can be done only by revising software, and hence will not raise the cost.

The distance between the differential GPS reference station and the moving object may extend to around 1,000 km but it is desirable that the distance be within hundreds of kilometers. Accordingly, three to ten differential GPS reference stations could cover all parts of Japan. When the distance between the differential GPS reference station and the broadcasting station is long, a time delay due to the transmission link between them cannot be specified and hence poses a problem; it is desirable, therefore, that the differential GPS reference station be established in the same area together with the broadcasting station. At least, it is preferable that the distance between the both stations be chosen so that they can directly be interconnected to keep the transmission time constant, or that a fixed link of a constant transmission route can be used. When a transmission delay is unspecified, trouble could be avoided by delaying the broadcasting for a sufficiently long fixed time to exceed the expected longest transmission time from the reference station. At any rate, it is preferable to predict the variations of the pseudo ranges, their errors or correction values, and the position errors or their correction values in correspondence to the time delay from the transmission of the reference station to the broadcasting and to transmit the predicted values as the reference station information.

The RDS receiver is suitable for receiving the reference station information at the moving object, because it can automatically be switched to an alternate station (an RDS broadcasting station) on the basis of AF information even if the field intensity lowers according to the distance from a specified broadcasting station during the travel of the moving object.

## BRIEF DESCRIPTION OF THE DRAWINGS

Fig. 1 is a block diagram illustrating an embodiment of the present invention;

Fig. 2A is a diagram for explaining a system for generating reference station information and for correcting positioning data of a moving object in the embodiment of the present invention;

Fig. 2B is a diagram for explaining another system for generating reference station information and for correcting positioning data of a moving object in the embodiment of the present invention;

Fig. 2C is a diagram for explaining another system for generating reference station information and for correcting positioning data of a moving object in the embodiment of the present invention;

Fig. 2D is a diagram for explaining still another system for generating reference station information and for correcting positioning data of a moving object in the embodiment of the present invention; and

Fig. 3 is a block diagram illustrating an example of a radio receiver for a differential GPS positioning apparatus according to the present invention.

## DESCRIPTION OF THE PREFERRED EMBODIMENTS

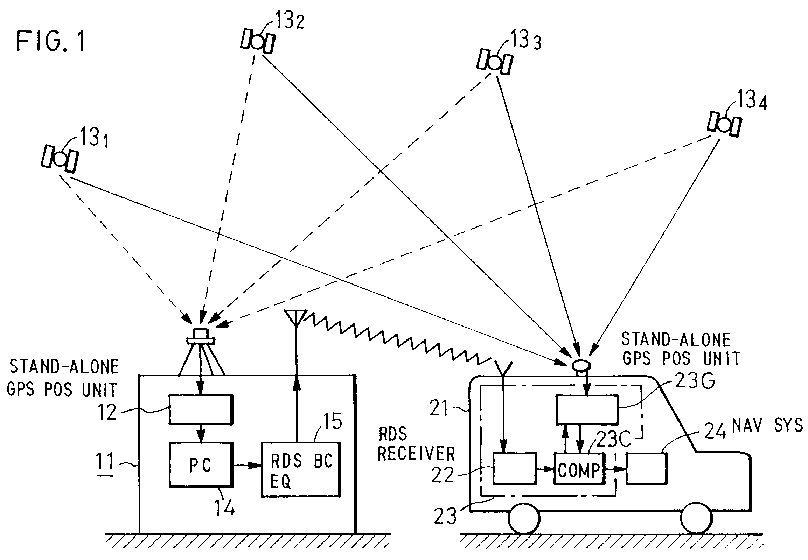

Fig. 1 illustrates in block form the outline of a differential GPS positioning system employing the differential GPS reference station according to the present invention. Briefly stated, according to the present invention, a differential GPS reference station 11, whose accurate position (hereinafter referred to as an actual position) is preknown, receives signals from a plurality of (at least three)

satellites, for example, $13_1$ to $13_4$ selected from satellites that the reference station is allowed to use, and the reference station broadcasts, via an existing public broadcasting network, reference station information which includes reference station positioning information composed of information corresponding to the position of the reference station 11 measured on the signals received from the selected satellites and information corresponding to the actual position of the reference station and utilized satellite information indicating the identification of the satellites used.

A moving object 21 receives the broadcast via an RDS receiver 22 to obtain the utilized satellite information included in the reference station information. The moving object 21 uses the utilized satellite information to select the same set of satellites $13_1$ to $13_4$ as mentioned above then receives signals therefrom via a GPS stand-alone positioning unit 23G to measure the position of the moving object 21. The measured value is provided to a computing part 23C and corrected on the basis of the reference station positioning information contained in the reference station information, whereby the position of the moving object 21 is determined. The RDS receiver 22, the GPS stand-alone positioning unit 23G and the computing part 23C constitute a differential GPS positioning apparatus 23. The embodiment of Fig. 1 will hereinafter be described in detail.

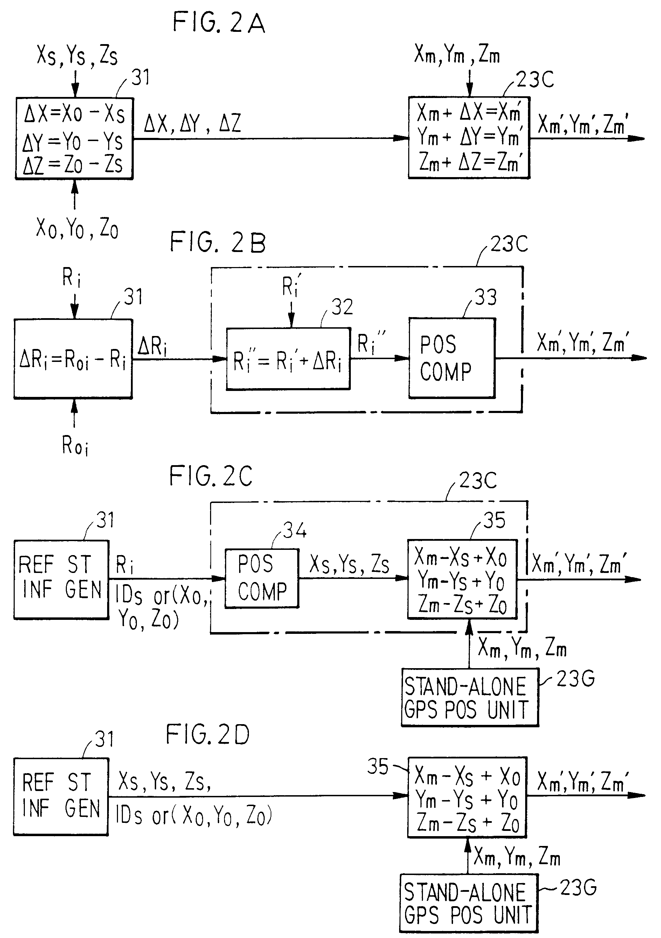

The differential GPS reference station 11 is shown to be used also as a broadcasting station. The differential GPS reference station 11 is an ordinary (commercially available) GPS stand-alone positioning unit 12, which selects four GPS satellites, for instance, $13_1$ through $13_4$, as one set from observable GPS satellites. The selecting function is built in the commercially available GPS stand-alone positioning unit 12. Depending on what information is used as the reference station positioning information which is measured by the reference station 11 and included in the reference station information for broadcasting, and depending on what correction on the position of the moving object 21 is made therein, four systems shown in Figs. 2A through 2D are possible.

According to a first system depicted in Fig. 2A, in the differential GPS reference station 11 the signals from the four satellites selected by the GPS stand-alone positioning unit 12 are used to solve four simultaneous equations in the cases of i = 1, 2, 3, 4 with respect to the following equation:

$$\{(X_i - X_s)^2 + (Y_i - Y_s)^2 + (Z_i - Z_s)^2\}^{1/2} = C(T_i - \Delta T_s) \quad (2)$$

By this, the measured position (Xs, Ys, Zs) of the reference station 11 is obtained, which is then provided to a personal computer 14. In the above, $\Delta T_s$ indicates a timepiece error in the GPS stand-alone positioning unit 12 of the reference station 11. The personal computer 11 calculates errors (correction values), $\Delta X = X_o - X_s$, $\Delta Y = Y_o - Y_s$, $\Delta Z = Z_o - Z_s$, of the measured position (Xs, Ys, Zs) from the actual position (Xo, Yo, Zo) of the differential GPS reference station 11. These correction values are included, as the reference station positioning information, in the reference station information together with the ID numbers of the utilized satellites $13_1$ through $13_4$ or their PRN code numbers (the used satellite information) $N_1$ through $N_4$. The reference station information is provided to RDS broadcasting equipment 15. The RDS broadcasting equipment 15 rearranges the reference station information into RDS data format, which is broadcast via an antenna 16 while being multiplexed with FM broadcasting (music, for example).

On the other hand, the moving object, for instance, a car 21 is equipped with the RDS receiver 22 of FM broadcasting. The RDS multiplexed reference station information ($\Delta X$, $\Delta Y$, $\Delta Z$ and the PRN numbers $N_1$ through $N_4$) on the FM broadcasting received by the RDS receiver 22 are separated, thereafter being provided to the computing part 23C. The GPS stand-alone positioning unit 23G performs stand-alone positioning in the same manner as does the GPS stand-alone positioning unit 12 of the reference station 11, through utilization of the satellites of the PRN numbers indicated by the utilized satellite information provided from the computing part 23C. The positioned values (Xm, Ym, Zm) thus obtained are provided to the computing part 23C. In the computing part 23C the positioned values (Xm, Ym, Zm) are corrected by adding thereto the correction values $\Delta X$, $\Delta Y$, $\Delta Z$, and the corrected values (Xm + $\Delta X$ = Xm', Ym + $\Delta Y$ = Ym', Zm + $\Delta Z$ = Zm') are fed to a navigation system 24. The computing part 23C may also be implemented as a microcomputer (not shown) in the navigation system 24.

That is, in this example the position correction values $\Delta X$, $\Delta Y$, $\Delta Z$ are computed, as shown in Fig. 2A, by a reference station information generating part 31 (which is executed by the personal computer 14) in the differential GPS reference station 11, and the position correction values $\Delta X$, $\Delta Y$, $\Delta Z$ are added to the measured values Xm, Ym, Zm in the computing part 23C of the moving object 21. It is evident that the reference station 11 may also broadcast, as the reference station positioning information, the actual position (Xo, Yo, Zo) or reference station identifying information IDs indicating the actual position and the measured position (Xs, Ys, Zs), instead of sending out the position correction values $\Delta X$, $\Delta Y$, $\Delta Z$, so that the position correction values are calculated in the moving object 21.

Fig. 2B shows a second system, wherein corrective values $\Delta Ri$ (i = 1, 2, 3, 4) of pseudo ranges may also be used, as the reference station positioning information, in place of the position correction values $\Delta X$, $\Delta Y$, $\Delta Z$. That is, the pseudo range Ri between an i-th satellite and the differential GPS reference station 11 is measured by the GPS stand-alone positioning unit 12 of the reference station 11 on the basis of the difference Ti between the time point of receiving the PRN code from the i-th satellite and the time point of transmitting the code therefrom and the light velocity C. In the reference station information generating part 31 by the personal computer 14, the position (Xi, Yi, Zi) of the i-th satellite obtained from its orbit data received therefrom and the orbit data transmitting time and the actual position (Xo, Yo, Zo) of the reference station 11 are used to calculate the following actual distance between the i-th satellite and the reference station 11 as follows:

$$\mathrm{Roi} = \{(Xi - Xo)^2 + (Yi - Yo)^2 + (Zi - Zo)^2\}^{1/2} \quad \text{-} \quad (3)$$

Thus, the correction values $\Delta Ri$ of the pseudo range of the i-th satellite is obtained. The correction value $\Delta Ri$ (i = 1, 2, 3, 4) for each of the four satellites is included, as the reference station positioning information, in the reference station information together with the ID numbers or PRN code numbers of the satellites used for obtaining the correction values, that is, the utilized satellite information Ni, and this reference station information is broadcast.

In the moving object 21, the pseudo ranges Ri' between the satellite and the moving object 21, indicated by the utilized satellite information in the reference station information received therefrom, is measured by the GPS stand-alone positioning unit 23G and in a correcting part 32 forming part of the computing part 23C the correction values $\Delta Ri$ are added to the respective pseudo ranges Ri' to correct them. In a position computing part 33 forming part of the computing part 23C the corrected pseudo ranges Ri'' are used to solve four simultaneous equations in the case of i = 1, 2, 3, 4 with respect to the following equation:

$$\{(Xi - Xm')^2 + (Yi - Ym')^2 + (Zi - Zm')^2\}^{1/2} = Ri'' - C\Delta Tm \quad (4)$$

By this, the position (Xm', Ym', Zm') of the moving object 21 is obtained. In the above, $\Delta Tm$ is indicative of a clock error in the GPS stand-alone positioning unit 23G of the moving object 21. That is, in this example, as shown in Fig. 2B, the reference station 11 derives the correction values $\Delta Ri$ from the values Ri and Roi in the reference station information generating part 31 executed by the personal computer 14 and then sends out the correction values as the reference station positioning information. On the other hand, in the correcting part in the computing part 23C of the moving object 21 the correction values $\Delta Ri$ are added to the value Ri', and the added values are provided as the measured distance Ri'' to the position computing part 33 and Eq. (4) is solved, whereby the position (Xm', Ym', Zm') of the moving body 21 is obtained.

Fig. 2C shows a third system, wherein a combination of the pseudo ranges Ri (i = 1, 2, 3, 4) and the position information of the reference station 11 is used as the reference station positioning information, in place of the correction values ($\Delta X$, $\Delta Y$, $\Delta Z$), and is combined with the utilized satellite numbers i or PRN code numbers for transmission as the reference station information. In this instance, the position information of the reference station 11 may be its actual position (Xo, Yo, Zo); alternatively, the identification number IDs indicating the reference station may also be sent, since the actual position of the reference station corresponding to the IDs is preknown. In the latter case, the moving object 21 has a table showing the relationship between the identification number and actual position of each reference station, and hence is capable of reading out the actual position of the reference station from the table on the basis of the received reference station identification number IDs. In the moving object 21, the GPS stand-alone positioning unit 23G obtains the position (Xm, Ym, Zm) by solving, through use of the same satellites as those indicated by the received utilized satellite information, four simultaneous equations are obtainable with respect to the following equation for i = 1, 2, 3, 4.

$$\{(Xi - Xm)^2 + (Yi - Ym)^2 + (Zi - Zm)^2\}^{1/2} = C(Ti - \Delta Tm) \quad (5)$$

Furthermore, the position computing part 34 in the computing part 23C obtains the position (Xs, Ys, Zs) of the reference station 11 by solving, from the four pseudo ranges Ri obtained by receiving the broadcast from the reference station 11, four simultaneous equations obtainable with respect to the following equation for i = 1, 2, 3, 4.

$$\{(Xi - Xs)^2 + (Yi - Ys)^2 + (Zi - Zs)^2\}^{1/2} = Ri - C\Delta Tm \quad (6)$$

The difference between these positions, (Xm - Xs, Ym - Ys, Zm - Zs), is computed to obtain the relative position of the moving object 21 to the reference station 11. At this time, similar positioning errors contained in the both positions are cancelled out by each other and thus the relative position can be obtained with high accuracy. This relative position (Xm - Xs, Ym - Ys, Zm - Zs) is added to the actual position (Xo, Yo, Zo) of the reference station 11 derived from the received position information on the reference station to thereby obtain the position (Xm', Ym', Zm') of the moving object 21. The reference station position information may be its actual position (Xo, Yo, Zo) as mentioned above, or it may also be the reference station identifying information IDs.

In the latter case, the reference station 11 outputs, as the reference station information, a combination of the pseudo ranges Ri and the reference station identifying information IDs from the reference station information generating part 31 executed by the personal computer 14. On the part of the moving object 21, the position (Xs, Ys, Zs) of the reference station is computed by the position computing part 34 in the computing part 23C from the pseudo ranges Ri obtained by receiving the broadcast from the reference station 11 and in the correcting part 35 the reference station identifying information IDs is used to read out the actual position (Xo, Yo, Zo) of the reference station 11 from the table indicating the actual position of each reference station and computations, Xm - Xs + Xo = Xm' Ym - Ys + Yo = Ym', Zm - Zs + Zo = Zm', are conducted. Incidentally, the position computing part 34 can be used also as a position computing part (not shown) in the GPS stand-alone positioning unit 23G.

In the system of Fig. 2C the pseudo ranges Ri are sent as the reference station positioning information and in the moving object 21 the positioned value (Xs, Ys, Zs) of the reference station 11 is calculated from the pseudo ranges Ri, but it is also possible to use such a system as shown in Fig. 2D. That is, in the reference station 11 the reference station information generating part 31 obtains the positioned value (Xs, Ys, Zs) of the reference station 11 by solving four Eqs. (6) for i = 1, 2, 3, 4 and transmits the positioned value, whereas in the moving object 21 the correcting part 35 corrects the measured values Xm, Ym, Zm of the moving object 21 to obtain corrected values Xm', Ym', Zm' by performing the same calculations as those in the case of Fig. 2C.

It will be understood that if Zs, Zo and Zm are preknown fixed values equal to one another in the above-described four systems, the calculations in each system need to be conducted only for i = 1, 2, 3. For the sake of brevity, the respective systems have been described in connection with the case where the reference station 11 delivers the utilized satellite information and the reference station positioning information for one set of satellites, but in practice, owing to an obstacle or the like, the moving object 21 is not always ready for receiving signals from all the satellites specified by the utilized satellite information. This situation could be met, in general, by the use of a system wherein the reference station determines and broadcasts the utilized satellite information and reference station positioning information for all four-satellite combinations of satellites that are available for the reference station, for example, for all combinations each consisting of four such satellites, whereas each moving object selectively use that one of the combinations of usable satellites which has the minimum GDOP (Geometrical Dilution of Precision) value, for instance.

In the case of broadcasting the pseudo range data or its error data as the reference station positioning information, the reference station needs only to broadcast data related to the individual satellites which are available; there is no need of broadcasting data for all combinations each consisting of four usable satellites as in the case of broadcasting the position errors. The moving object needs only to selectively use the pseudo range data related to the satellites which are usable and have the minimum GDOP value, among the received pseudo range data or error data about the respective satellites.

To offer the reference station information service all over Japan and the adjacent seas, it is possible to set up differential GPS reference stations in, for example, NHK's 500 FM stations; but in this case, it is also possible to set up such reference stations in principal ones of the FM stations and to send the reference station information to the adjacent stations.

The RDS system is a kind of FM multiplex broadcasting and its service content includes AF (Alternate Frequency) information. In the case where a car or similar moving object equipped with an FM radio receiver travels while at the same time receiving the radio wave of a certain broadcasting station, if the field intensity decreases with an increase in the distance from the broadcasting station, then the FM radio receiver itself automatically carries out tune switching through utilization of the AF information to receive the radio wave of the adjacent alternate station (a network station of the same program service). By utilizing such automatic tune switching, the radio wave of a station of the broadcasting network which offers the reference station information including the GPS positioning errors can be received regardless of the position of travel of the moving object. To put the reference station information on the RDS network has higher merit for the differential GPS than in the case of putting the reference station information on other FM multiplex broadcasting.

The RDS is the standards adopted by the European Broadcasting Union and it is now under test in U.S.A. and Hong Kong and will be soon put into practice in Korea as well. In Japan a system a little different from the RDS system is now being studied, and hence is feared to lack compatibility with the RDS system which is and will be used all over the world. In other countries except Japan, the RDS system, DGPS receivers, cars and the like can be used in common.

The navigation system 24 that is installed on the moving object 21 such as a car has a function of displaying the position of travel of the car 21 on a map on the basis of map information incorporated in an ordinary CDROM or the like and is also capable of combining such a display function with other traffic congestion information and providing an indication of an optimum route to a driver's destination. As the RDS receiver 22 can be used a conventional car radio (equipped with the RDS function).

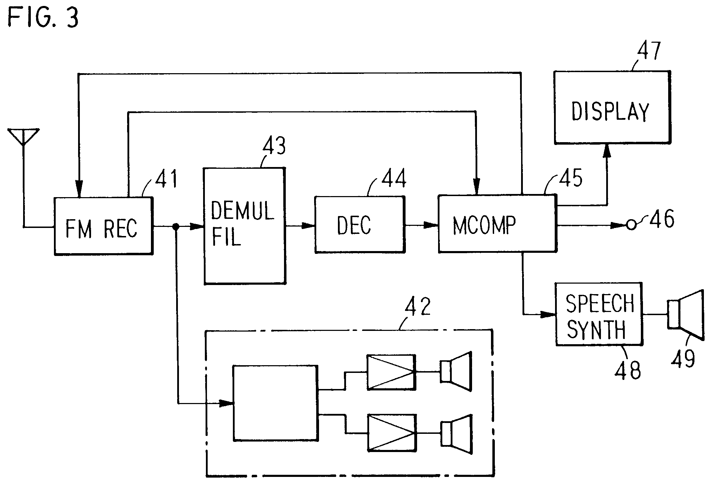

That is, in the FM car radio equipped with the RDS function, as shown in Fig. 3, an FM receiving part 41 selects a channel and performs an FM demodulation of the received signal to obtain a composite signal composed of a stereo signal and a subcarrier signal (57 kHz) modulated by RDS data. The stereo signal is separated by a stereo reproducing part 42 into left and right signals, which are fed to left and right speakers, respectively. The subcarrier signal is demultiplexed by a demultiplexing filter 43 and the demultiplexed subcarrier signal is decoded by a decoder 44 into data (a binary signal), which is input into a microcomputer 45. In the microcomputer 45 various pieces of data in the RDS data are sequentially separated therefrom and used. In the case where the FM car radio is employed for the differential GPS positioning apparatus, the utilized satellite information and the reference station positioning information included in the reference station information are separated therefrom in the microcomputer 45 and then supplied via an external output 46 to the computing part 23C in Fig. 1.

The reference station information extracted by the microcomputer 45 may also be supplied to a display 47 for providing a character display. Simultaneously with or independently of this, the reference station information may be supplied from the microcomputer 45 to a speech synthesizer 48 to synthesize a speech which is fed to a speaker 49. It is also possible for a user to input the reference station information into the computing part 23C after once seeing or hearing such visual or audio information.

In an ordinary RDS radio the microcomputer 45 monitors the received radio wave level of the FM receiving part 41 and automatic tune switching means is provided to automatically control a tuning circuit of the FM receiving part 41 to receive that one of broadcasting stations of the same network which is high in field intensity.

The DGPS positioning apparatus can be made small and inexpensive not only in the case of providing the RDS receiver 22 in an independent form as mentioned above, but also by incorporating into the apparatus an FM-RDS receiving circuit which has only a reference station information extracting function and a function of automatically tuning, through use of the AF information, specifically to a network which is broadcasting the reference station information. By forming the RDS receiver 22 including an ordinary FM-RDS radio feature as a unitary structure with the DGPS positioning apparatus 23 or by forming them separately but interconnectable, it is possible to equip the DGPS positioning apparatus 23 with a FM/AM radio broadcast receiving function to provide amusement as well.

The error assumed to be artificially introduced in the C/A code is such that an error of 20 to 100 m undergoes a change at a rate of 0.4 m/s which can be approximated by a polynomial of time, and this error is said to have a period of about 6 to 14 minutes. Hence, it is possible to adapt the differential GPS reference station so that it obtains an approximate expression of the polynomial by an observation for several to 10 seconds to thereby predict a changing value for several minutes thereafter and broadcasts the predicted value as the reference station information. This can be used to correct a delay in a data transmission link or the like. That is, an error between the correction value measuring time and the correction value broadcasting time can be corrected.

In view of the travel speed of the moving object, it is desirable to transmit the reference station information at time intervals of several to ten seconds. The DGPS reference station 11 and the moving object 21 both can sufficiently receive and analyze the GPS data at one-second intervals and the position of the moving object may be measured every five seconds or so, in practice, taking into account the travel speed of a car which is usually 100 km/h (i.e. 28 m/s).

If the DGPS reference station 11 and the broadcasting station are located at the same place, the broadcasting frequency of the broadcasting station can be used as an identification of the place. When the reference station 11 and the broadcasting station are provided at separate places, it is desirable to broadcast an ID code for identifying the reference station. The broadcasting station is usually built at the mountaintop but the DGPS reference station 11 may preferably be situated on level ground because automobiles usually travel in city areas and plains.

The RDS data organization is such that 16 bits, except an additional bit, are stored in one block of 22 ms. Assuming that the error correction values (which may be latitude/longitude or meter, and the following description will be given on the assumption that the error correction values are expressed by meter represents the north (N), the east (E) and the above (Z) as positive values, that the correction numerical values are each composed of a sign ± and a three-digit number, that the data sequence is ΔX - ΔY - ΔZ and that the required number of data bits is four bits/digit, 3 × 4 + 1 (plus or minus) = 13 bits, and consequently the data ΔX, ΔY, ΔZ can be transmitted with three blocks. Moreover, in the case of transmitting the PRN codes of four satellites, four blocks are used and the data can be broadcast with a total of seven blocks (22 ms × 7 = 154 ms); in this case, 154 ms is used for GPS positioning every five seconds and the other time intervals can be used for the conventional RDS broadcasting function, and thus the RDS positioning does not hinder the RDS broadcasting.

The public broadcasts which are used for the present invention may be commercial and educational broadcasts as well as the broadcasts by central and local governments. In short, they are broadcasts for the general public, that is, TV broadcasts, radio broadcasts, satellite broadcasts, weather broadcasts (including FAX), disaster prevention broadcasts. In the case where these broadcasts are used, channel switching is needed each time the moving object travels out of a respective broadcasting service area. In systems other than the RDS one, prestored data on respective broadcasting stations, that is, the positions of broadcasting stations, broadcasting frequencies, networks, etc. can be used for channel switching, and they can be input into the navigation map in advance.

In the case of applying the present invention to car navigation, the RDS receiver 22 can be used also as a car radio and thus the invention has many advantages in size and in cost. Moreover, the computing part 23C may be omitted, in which case the reference station information from the RDS receiver 22 is input into the navigation system 24 and the measured value of the GPS stand-alone positioning unit 23G is corrected by a CPU (not shown) in the navigation system 24. The features of both the GPS stand-alone positioning unit 23G and the RDS receiver 22 may be incorporated in the navigation system 24.

As described above, according to the present invention, in the DGPS system the reference station information can be transmitted to the DGPS positioning apparatus of the moving object by such a very simple and inexpensive method as radio and hence the invention can be used widely for GPS or navigation systems of automobiles, motorcycles, personels, etc. The DGPS positioning apparatus for moving objects according to the present invention can be formed as a small receiver, and hence can be made portable. The existing car navigation system that utilizes principally a number of sensors and the stand-alone positioning GPS as secondary means can be modified into a system which principally uses the DGPS and the sensors are made inexpensive or unnecessary - -this permits reduction of the cost of the car navigation system and its simplication, and hence is effective in popularizing the car navigation system. In this instance, the RDS receiver 22 can be used also as a car radio. The use of the FM-RDS feature as the reference station information broadcasting means produces an effect of allowing the differential GPS operation at any travel positions of the moving object, regardless of the service areas of respective broadcasting stations, because channel switching is automatically carried out as the moving object travels.

It will be apparent that many modifications and variations may be effected without departing from the scope of the novel concepts of the present invention.

## Claims

1. A differential GPS positioning method which receives signals from a plurality of GPS satellites and a signal from a reference station and determines the position of reception, said method comprising:

(a) a step wherein a differential GPS reference station, the actual position of which is preknown, receives signals from at least three selected satellites and generates, on the basis of the received signal, reference station positioning information including measured position information corresponding to a measured position of said reference station defined by said satellites and actual position information corresponding to the actual position of said reference station;

(b) a step wherein utilized satellite information indicating said selected satellites and said reference station positioning information in said step (a) are combined with each other and outputs as reference station information;

(c) a step wherein said reference station information in said step (b) is broadcast by conventional public broadcasting means after being multiplexed with its radio wave;

(d) a step wherein a moving object receives said radio wave and separates said utilized satellite information and said reference station positioning information from said reference station information in said step (c);

(e) a step wherein signals from satellites indicated by said utilized satellite information separated in said step (d) are selectively received by a GPS stand-alone positioning means of said moving object and moving object position information corresponding to the position of said moving object is calculated on the basis of said received signals; and

(f) a step of calculating the position of said moving object corrected on the basis of said moving object position information obtained in said step (e) and said reference station positioning information separated in said step (d).

2. The method of claim 1, wherein said step (a) includes a step of measuring the position of said reference station by said GPS stand-alone positioning means on the basis of orbit data received by said GPS stand-alone positioning means from said satellites, respectively, and a step of generating, as said reference station positioning information, the difference between the measured position of said reference station and said actual position of said reference station; said step (e) is a step of measuring the position of said moving object, as said moving object position information, by said GPS stand-alone positioning means of said moving object; and said step (f) is a step of obtaining said corrected position of said moving object by adding the measured position of said moving object with said difference separated as said reference station positioning information.

3. The method of claim 1, wherein said step (a) includes a step of measuring the position of said reference station on the basis of the orbit data received by said GPS stand-alone positioning means from said satellites, respectively, and a step of generating said measured position and said actual position information as said reference station positioning information; said step (e) is a step of measuring the position of said moving object, as said moving object position information, by said GPS stand-alone positioning means of said moving object; and said step (f) includes a step of calculating the difference between the measured position of said reference station separated as said reference station positioning information and the actual position of said reference station obtained from said actual position information, and a step of adding said difference to the measured position of said moving object to obtain said corrected position of said moving object.

4. The method of claim 1, wherein said step (a) includes a step of calculating pseudo ranges between said reference station and said respective satellites by said GPS stand-alone positioning means on the basis of the times needed for the signals from said satellites to reach said reference station, a step of calculating the positions of said satellites from the orbit data received therefrom and calculating the actual distances between said satellites and said reference station from said calculated positions of said satellites and said actual position of said reference station, and a step of generating the differences between said actual distances and said pseudo ranges, as said reference station positioning information, respectively; said step (e) is a step of calculating pseudo ranges between said moving object and said satellites and the positions of said satellites by said GPS stand-alone positioning means of said moving object, as said moving object position information, respectively; and said step (f) includes a step of obtaining corrected pseudo ranges by adding said differences, separated as said reference station information, to said pseudo ranges between said moving object and said satellites, respectively, and a step of calculating said corrected position of said moving object on the basis of the relationship between said calculated positions of said satellites and said corrected pseudo ranges.

5. The method of claim 1, wherein said step (a) includes a step of calculating pseudo ranges between said reference station and said satellites by GPS stand-alone positioning means on the basis of the times needed for the signals from said satellites to reach said reference station, and a step of generating sets of said pseudo ranges and said actual position information as said reference station positioning information; said step (e) is a step of calculating the positions of said satellites and the position of said moving object, as said moving object position information, respectively, by said GPS stand-alone positioning means of said moving object; and said step (f) includes a step of calculating the position of said reference station on the basis of the relationship between the respective pseudo ranges of said reference station separated as said reference station positioning information and the calculated positions of said satellites, and a step of obtaining the difference between the position of said moving object and the position of said reference station and adding said difference with the actual position obtained from said actual position information to obtain said corrected position of said moving object.

6. The method of claim 1, wherein said step (a) includes a step of measuring the position of said reference station by GPS stand-alone positioning means on the basis of orbit data received from said satellites and a step of generating a set of information corresponding to the position of said reference station and the said actual position of said reference station; said step (e) is a step of calculating the position of said moving object, as said moving object position information, by said GPS stand-alone positioning means of said moving object; and said step (f) includes a step of obtaining the difference between the position of said moving object and the position of said reference station separated as said reference station information, and a step of adding said difference with said actual position obtained from said actual position information to thereby obtain said corrected position of said moving object.

7. The method of claim 3, 5, or 6, wherein said actual position information is said actual position of said reference station.

8. The method of claim 3, 5, or 6, wherein said actual position information is identification information for identifying said reference station and said step (f) includes a step wherein the actual position of said reference station corresponding to said identification information is read out of a predetermined table indicating the relationship between the reference station indicated by said identification information and its actual position.

9. A differential GPS reference station whose accurate actual position is preknown, said station comprising:

positioning means which receives signals from a plurality of satellites, performs GPS positioning and generates reference station positioning information corresponding to a measured position of said reference station;

means for generating reference station information including said reference station positioning information obtained with said positioning means and utilized satellite information indicating said plurality of satellites used; and

means for broadcasting said reference station information while multiplexing it with a public broadcast.

10. A differential GPS reference station whose accurate actual position is preknown, said reference station comprising:

positioning means which receives signals from a plurality of satellites, performs GPS positioning and generates reference station positioning information corresponding to a measured position of said reference station;

means for generating reference station information including said reference station positioning information obtained with said positioning means and utilized satellite information indicating said plurality of satellites used; and

means for sending said reference station information to a broadcasting station wherein it is multiplexed with a public broadcast.

11. The reference station of claim 9 or 10, wherein said reference station positioning information includes an error of the pseudo range between said reference station and each of said plurality of satellites or a correction value for said pseudo range or a predictive value of said pseudo range after a predetermined time, and said utilized satellite information includes identification numbers and/or pseudo random codes of said utilized satellites.

12. The reference station of claim 9 or 10, wherein said reference station information includes an error between measured and actual positions of said reference station, or a correction value therefor, or a predictive value of said error or corrected value after a predetermined time.

13. The reference station of claim 9 or 10, wherein said reference station positioning information includes a pseudo range between said reference station and each of said utilized satellites or a predictive value of said pseudo range after a predetermined time and position information of said reference station, and said utilized satellite information includes at least one of identification numbers and pseudo random code numbers of said utilized satellites.

14. The reference station of claim 9 or 10, wherein said public broadcast is any one of a radio broadcast, a TV broadcast, a satellite broadcast, a weather broadcast and a weather map facsimile message and a disaster preventing broadcast.

15. The reference station of claim 9 or 10, wherein said public broadcast is a radio broadcast and said multiplexing system is of the RDS standard adopted by the Europe Broadcasting Union or similar standard.

16. A differential GPS positioning apparatus carried on a moving object or made in a portable form, said apparatus comprising:

positioning means for performing differential GPS positioning;

reference station information extracting means which receives a public broadcast from a differential GPS reference station and extracts reference station information multiplexed with said public broadcast;

combining means for combining said extracted reference station information with data measured by said GPS positioning means to perform positioning of said moving object.

17. The apparatus of claim 16, wherein said reference station information is errors of pseudo ranges between said differential GPS reference station and said utilized satellites or correction values for said errors or their predictive values after a predetermined time, and said combining means is means whereby the pseudo ranges between said moving object and the same utilized satellites, measured by said positioning means of said moving object, are corrected with said reference station information to obtain the position of said moving object.

18. The apparatus of claim 16, wherein said reference station information is an error between measured and actual positions of said reference station or a correction value for said error, or its predictive value after a predetermined time, and said combining means is means whereby the measured position of said moving object, measured by said positioning means through use of said utilized satellite, is corrected with said reference station information.

19. The apparatus of claim 16, wherein said reference station information is a pseudo range between said reference station and each used satellite or its predictive value after a predetermined time and actual position information of said reference station, and said combining means which obtains the position of said reference station from said reference station information, obtains the difference between said position of said reference station thus obtained and the position of said moving object obtained by said positioning means and adds the relative position to the actual position of said reference position obtained from the position information of said reference station to obtain the position of said moving object.

20. The apparatus of claim 16, wherein said reference station information is a measured position of said reference station obtained by said reference station and the actual position information of said reference station, and said combining means is means which obtains the difference between said measured position of said reference station and the position of said moving object obtained by said positioning means and adds the relative position to the actual position of said reference station obtained from the position information of said reference station to thereby obtain the position of said moving object.

21. The apparatus of any one of claims 16 through 20, wherein said reference station information extracting means is provided with extracting means which receives an FM radio broadcast and extracts reference station information multiplexed by a system of the RDS standard of the European Broadcasting Union or a similar system, and automatic channel switching means for automatically switching the tune of said FM radio broadcast to a channel of a normal field intensity when the received radio wave becomes weak.

22. The apparatus of claim 21, wherein said reference station information extracting means and said automatic channel switching means are included in an FM-RDS radio receiver and connected thereto or formed as a unitary structure therewith.

23. A radio receiver for a differential GPS positioning apparatus, comprising:

automatically channel switching means for automatically switching a channel of a reduced field intensity to a channel of a normal field intensity;

means for receiving a broadcasting wave having multiplexed therewith reference station information of a differential GPS reference station and for extracting said reference station information from said received broadcasting wave; and

a terminal for providing therethrough said extracted reference station information to the outside.

24. A radio receiver for a differential GPS positioning apparatus, comprising:

automatically switching means for automatically switching a channel of a reduced field intensity to a channel of a normal field intensity;

    means for receiving a broadcasting wave having multiplexed therewith reference station information of a differential GPS reference station and for extracting said reference station information from said received broadcasting wave; and

    means for outputting said extracted reference station information as a visible or audible form.

25. A navigation apparatus, characterized by the provision of said differential GPS positioning apparatus of any one of claims 16 through 20.

FIG. 1

STAND-ALONE
GPS POS UNIT — 134

133

132

131

STAND-ALONE
GPS POS UNIT — 23G

24 NAV SYS

23C

COMP

RDS
RECEIVER — 22

21

23

15

RDS BC
EQ

PC — 14

STAND-ALONE
GPS POS UNIT — 12

11

## FIG. 2A

$X_s, Y_s, Z_s$

31

$$\Delta X = X_0 - X_s$$
$$\Delta Y = Y_0 - Y_s$$
$$\Delta Z = Z_0 - Z_s$$

$\Delta X, \Delta Y, \Delta Z$

$X_m, Y_m, Z_m$

23C

$$X_m + \Delta X = X_m'$$
$$Y_m + \Delta Y = Y_m'$$
$$Z_m + \Delta Z = Z_m'$$

$X_m', Y_m', Z_m'$

$X_0, Y_0, Z_0$

## FIG. 2B

23C

$R_i$

31

$R_i'$

32

33

$$\Delta R_i = R_{0i} - R_i$$

$\Delta R_i$

$$R_i'' = R_i' + \Delta R_i$$

$R_i''$

POS
COMP

$X_m', Y_m', Z_m'$

$R_{0i}$

## FIG. 2C

23C

31

34

35

REF ST
INF GEN

$R_i$

IDs or($X_0, Y_0, Z_0$)

POS
COMP

$X_s, Y_s, Z_s$

$$X_m - X_s + X_0$$
$$Y_m - Y_s + Y_0$$
$$Z_m - Z_s + Z_0$$

$X_m', Y_m', Z_m'$

$X_m, Y_m, Z_m$

STAND-ALONE
GPS POS UNIT

23G

## FIG. 2D

31

35

REF ST
INF GEN

$X_s, Y_s, Z_s,$

IDs or($X_0, Y_0, Z_0$)

$$X_m - X_s + X_0$$
$$Y_m - Y_s + Y_0$$
$$Z_m - Z_s + Z_0$$

$X_m', Y_m', Z_m'$

$X_m, Y_m, Z_m$

STAND-ALONE
GPS POS UNIT

23G

16

FIG. 3